# EUROPEAN PATENT SPECIFICATION

(11) **EP 2 196 834 B1**
(45) Date of publication and mention of the grant of the patent: **09.11.2016**
(21) Application number: 09015297.6
(22) Date of filing: 10.12.2009
(51) Int. Cl.: G02B 6/44

(54) **A buffered optical fiber, a telecommunications cable including a plurality of optical fibers, and a method of fabricating such a fiber**
Gepufferte optische Faser, Telekommunikationskabel mit optischen Fasern und Verfahren zur Herstellung derartiger Faser
Fibre optique gainée, cable de télécommunication comportant plusieurs fibres optiques et procédé de fabrication d'une telle fibre

(30) Priority: 12.12.2008 FR 0807021
(43) Date of publication of application: 16.06.2010
(73) Proprietor: Draka Comteq B.V., 1083 HJ Amsterdam (NL)
(72) Inventor: Testu, Jean-Marc, 06600 Antibes Juan Les Pins (FR); Tatat, Olivier, 62231 Sangatte (FR)
(74) Representative: Algemeen Octrooi- en Merkenbureau B.V.

(56) References cited:
- EP-A- 0 784 220
- EP-A- 1 324 091
- EP-A2- 1 944 637
- WO-A1-00/60393
- US-A- 5 440 660
- US-A- 5 925 461

## Description

The invention relates to the field of optical fiber telecommunications cables. More precisely, the invention relates to the field of telecommunications cables containing buffered optical fibers that need to be extracted from the cable over considerable lengths.

By way of non-limiting example, the buffered optical fibers are those used for outdoor telecommunications networks.

In order to feed different buildings, the buffered optical fibers of the cable need to be accessible. For this purpose, an operator makes an opening in the cable in order to extract one or more buffered optical fibers which are then directed towards the building that is to be served.

Typically, the optical fibers used present a standard diameter of 250 micrometers (µm). This diameter includes the sum of the dimensions of the optical fiber core, the cladding surrounding the core, and the coating surrounding the cladding. The core of the optical fiber serves to transport the optical signal. The cladding serves to confine the optical signal in the fiber core. The coating protects the cladding.

The standard diameter of 250 µm is increased to 900 µm when the protective sheath surrounds the optical fiber. This protective sheath provides sealing and protection against impacts, and it also makes the fiber easier for an operator to handle.

Buffered optical fibers are usually left free in the cavity formed by the wall of the cable so that it is easy for an operator to extract one or more optical fibers from the cable.

The buffered optical fibers used for this application may be of the type that with a tight buffer or a semi-tight buffer inside the protective sheath.

When the buffered optical fiber are organized in the tight buffer manner (also known as a "tight-buffer fiber"), the structure of the optical fiber formed in this way presents the advantages of being robust and of being capable of remaining stable over the usual utilization temperature range that generally extends from -40°C to +70°C.

Nevertheless, that optical fiber structure presents a major drawback.

Once the buffered optical fiber has been extracted from the cable, the operator still needs to extract the optical fiber itself (the fiber core, the cladding, and the coating) from the protective sheath.

Unfortunately, such extraction can be performed over a maximum of a few centimeters.

The bonding between the optical fiber and the protective sheath of said fiber is very strong, such that separating the optical fiber proper from its protective sheath over a long length leads to the coating being torn off the cladding.

That is why proposals have been made for buffered optical fibers that are of the semi-tight buffer type (also known as a "semi-tight buffer fiber"). With such a semi-tight structure, the optical fiber and the protective sheath of said fiber are not in direct contact, but are decoupled.

For this purpose, a gap of air is generally left between the optical fiber and its protective sheath.

As a result, it becomes possible to extract much greater lengths of optical fiber and protective sheath than with a cable having tight-buffer optical fibers. These lengths can typically be of the order of a few meters.

Nevertheless, the decoupling between an optical fiber and its protective sheath is not purely beneficial.

When an operator performs an operation of extracting a buffered optical fiber from the cable, the extraction force is applied to the protective sheath, which can then slide relative to the optical fiber. This can give rise to an offset between the length of optical fiber and the length of protective sheath.

In use, this offset can give rise to problems of attenuation in the signal transported by the optical fiber core.

The above-mentioned problems are not specific to the application to outdoor telecommunications networks that is mentioned purely by way of indication, and they can be encountered whenever it is desired to extract a buffered optical fiber from a cable.

These problems are well known, which is why proposals have already been made for buffered optical fibers that are suitable for mitigating some of these drawbacks.

Instead of using a gap of air between the optical fiber and the protective sheath, proposals have been made in particular to place an intermediate layer between the optical fiber and the protective sheath.

Mention can be made for example of document US-A-5 181 268 (D1) in which the intermediate layer can be constituted by a lubricant and a solid binder, the lubricant possibly being of the Teflon® type and the binder an acrylic polymer. Mention can also be made of document EP-A-0 690 033 (D2), which proposes a cross-linked intermediate layer comprising an ultra-high molecular weight polyethylene (UHMPWE) or Teflon® mixed with a photo-curable binder such as a urethane polymer. Mention can also be made of document US-A-6 775 443 (D3), which proposes a cross-linked intermediate layer comprising a matrix of urethane acrylate including oligomers, monomers, a photoinitiator, and an anti-oxidant in combination with a liquid release reagent such as liquid silicone.

Nevertheless, the use of Teflon® raises a problem faced with existing standards, since Teflon® includes fluorine, and it is therefore not suitable in particular for cabling a building. Furthermore, the use of curable materials implies method steps, such as passing under an ultraviolet (UV) lamp, that it would be advantageous to omit.

Buffered optical fibers are also known in which provision is made for mechanical reinforcement to increase the longitudinal strength of the buffered optical fiber.

This applies for example to document GB 2 096 343 (D4) which discloses a buffered optical fiber of semi-tight structure. According to that document, aramid strands are placed along the axis of the buffered optical fiber in the gap between the optical fiber and the protective sheath.

Nevertheless, it does not appear that the aramid strands present a coupling function between the optical fiber and its protective sheath.

The present invention thus proposes a buffered optical fiber structure enabling the various above-mentioned drawbacks to be mitigated with better efficiency than in existing structures.

The present invention also proposes a telecommunications cable including a plurality of such buffered optical fiber structures.

The present invention also provides a method of fabricating such a buffered optical fiber structure.

More precisely, the invention provides a buffered optical fiber structure according to claim 1.

The buffered optical fiber may also present at least one of the following characteristics, taken singly or in combination:
- the cavity includes two mechanical reinforcing strands and one optical fiber;
- the or each mechanical reinforcing strand is made of aramid;
- the at least one mechanical reinforcing strand is such that the optical fiber deforms with maximum elongation of 0.5% when it is subjected to a required extraction force, e.g. of 25 Newton (N);
   and
- the protective sheath is made from a material selected from: polybutylene terephthalate; nucleated polybutylene terephthalate; low-shrinkage polybutylene terephthalate; polyamide 12; amorphous polyamide 12; polyamide 11; polyvinyl chloride; nylon; polyethylene; a halogen-free flame retardant material; a urethane polymer; polyester; and a mixture thereof.

In a preferred embodiment the buffered optical fiber structure comprises two or more optical fibers (3).

The invention also provides a telecommunications cable comprising an outer sheath defining a hollow space having placed freely therein a plurality of buffered optical fibers of the invention.

The invention also provides a method of fabricating an optical fiber structure of the invention according to claim 8.

The method may also present at least one of the following characteristics, taken singly or in combination:
- prior to step a), a step is provided that consists in drawing an optical fiber preform to form a fiber core and cladding surrounding the core, and in applying a coating surrounding the cladding;
- the step of extruding the intermediate material is performed at a temperature lying in the range 130°C to 160°C, and preferably equal to about 140°C.

The invention can be better understood and other objects, advantages, and characteristics thereof appear more clearly on reading the following description made with reference to the accompanying drawings, in which:
- Figure 1 is a cross-section view of a buffered optical fiber in accordance with the invention;
- Figure 2 is a section view of another buffered optical fiber in accordance with the invention;
- Figure 3 is a section view of another buffered optical fiber in accordance with the invention; and
- Figure 4 is a section view of a telecommunications cable having a plurality of buffered optical fibers of the invention.

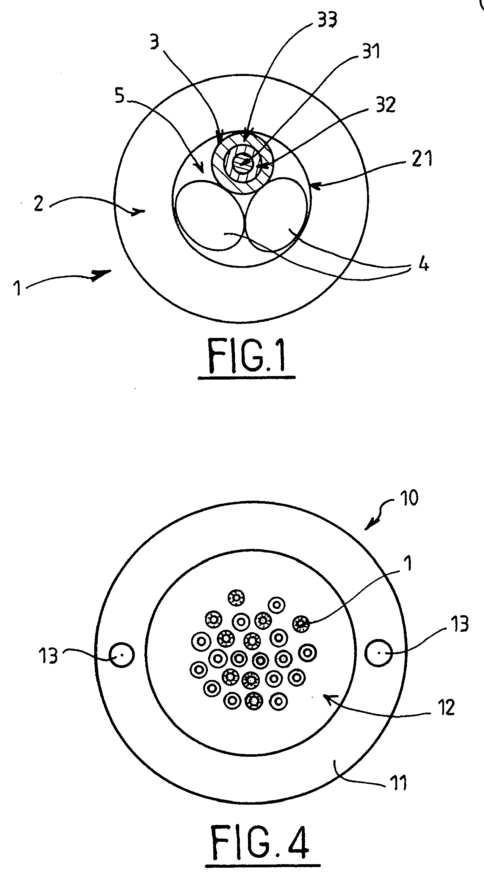

The buffered optical fiber 1 of the invention is shown in section view in various embodiments in Figures 1 to 3. With the buffered optical fiber 1 is meant a buffered optical fiber module 1.

It comprises a protective sheath 2 including a cavity 21 that extends longitudinally along the axis of the buffered optical fiber 1. The cavity 21 is substantially cylindrical in shape.

The cavity 21 has a plurality of elements including at least one optical fiber 3, at least one mechanical reinforcement means 4 extending along the optical fiber 3, and a peelable intermediate material 5 located between the protective sheath 2 and the assembly constituted by the optical fiber 3 together with said at least one mechanical reinforcement means 4.

The protective sheath 2 (also known as a "buffer") is generally made of a thermoplastic material or of urethane acrylate.

More generally, the protective sheath 2 may be made of a material selected from: polybutylene terephthalate (PBT); nucleated polybutylene terephthalate; low-shrinkage polybutylene terephthalate; polyamide 12 (PA12); amorphous polyamide 12; polyamide 11 (PA11); polyvinyl chloride (PVC); nylon; polyethylene (PE); a halogen-free flame retardant (HFFR) material; a urethane polymer; polyester; and a mixture thereof.

The optical fiber 3 comprises a fiber core 31 for transporting an optical signal, which core is surrounded by cladding 32 having the function of confining the optical signal transported by the core within the core 31 of the fiber, and a coating 33 surrounding the cladding 32 in order to protect the optical fiber.

In general, the coating 33 comprises one or more layers of photo-cross-linked acrylate resins. It may be colored in order to facilitate identifying fibers in the cable.

The optical fiber 3 (fiber core, cladding, and coating) presents a standard diameter of 250 µm. The optical fiber 3 together with its protective sheath 2 presents a standard diameter of 900 µm. Naturally, the invention is not limited to these dimensions and it could equally well apply to buffered optical fibers of different dimensions.

The mechanical reinforcement means 4 comprise at least one mechanical reinforcing strand, generally of aramid, running along the optical fiber 3. The or each aramid strand thus extends along the axis of the buffered optical fiber 1.

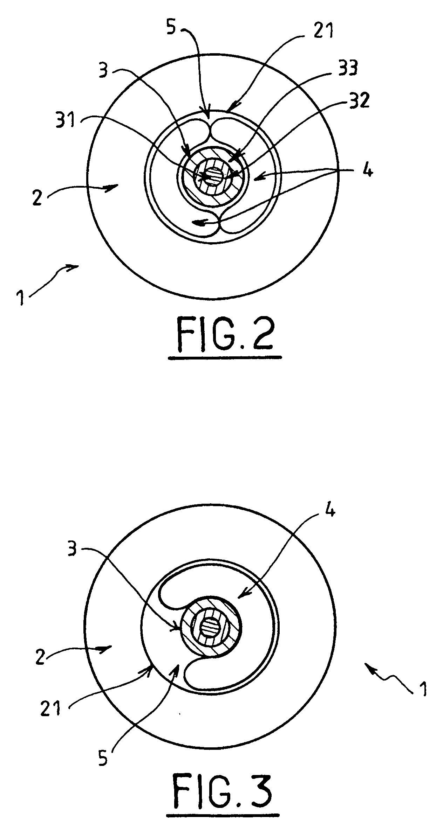

In Figures 1 and 2, there can be seen a buffered optical fiber having two mechanical reinforcing strands 4. It can be seen that the optical fiber 3 and the mechanical reinforcing strands 4 may have various dispositions. For example, in Figure 1, the arrangement is such that the optical fiber 3 is off-center within the cavity 21. In contrast, in Figure 2, the mechanical reinforcing strands 4 surround the optical fiber 3, which is itself centered in the cavity 21.

Figure 3 shows a buffered optical fiber 1 having only one mechanical reinforcing strand 4, surrounding the optical fiber 3 over a large fraction of its peripheral outline.

The mechanical reinforcing strand 4 is selected as a function of the dimensions and the performance required of the buffered optical fiber.

Furthermore, the diameter of the cavity 21 is selected to enable said at least one reinforcing strand 4 and the optical fiber 3 to be arranged as a good fit in the cavity. In the example shown, this diameter is therefore of the order of 500 µm. As a result, the optical fiber 3 is well supported in position in the cavity 21 and consequently the buffered optical fiber 1 is relatively stable over the usual operating temperature range of -40°C to +70°C.

A mechanical reinforcing strand 4 of this size serves to provide a large amount of mechanical reinforcement along the axis of the buffered optical fiber 1, by increasing the modulus of elasticity of the buffered optical fiber 1.

For example, the reinforcing strand 4 could be made from a 400 decitex (dtex) aramid filament. It could also be made from a filament made of glass or any other mechanical reinforcing material having mechanical strength comparable to that of a 400 dtex aramid filament.

Thus, when an operator performs an operation of extracting the buffered optical fiber 1 from the cable 10, the protective sheath 2 deforms little for a given extraction force.

In other words, this means that it is possible to extract much longer lengths of buffered optical fiber 1 from the cable 10 than is possible with existing solutions, and do to without risk of damaging the optical fiber 3.

Advantageously, the buffered optical fiber 1 has two mechanical reinforcing strands 4, generally made of aramid, that are disposed along the optical fiber 3 (Figures 1 and 2). By way of example, the two mechanical reinforcing strands 4 may both be constituted by respective 400 dtex filaments, however they should be selected as a function of the dimensions and the performance required of the buffered optical fiber 1.

For example, with a buffered optical fiber 1 of the invention having two aramid strands each of 400 dtex, it has been found that the buffered optical fiber 1 deforms at most with elongation of 0.5% for an extraction force of 25 N (Figure 1). By way of comparison, this level of deformation is obtained with an extraction force of only 8 N for a buffered optical fiber that does not have an aramid strand.

Instead of two aramid strands each of 400 dtex, it is also possible to have a single aramid strand, one or more glass strands, or strands of any other material capable of providing mechanical reinforcement, and presenting mechanical strength comparable to that of two aramid strands, so as to ensure maximum elongation of 0.5% for the buffered optical fiber 1 for an extraction force of 25 N.

Nevertheless, a buffered optical fiber 1 of the invention with two mechanical reinforcing strands 4, generally made of aramid, enables these strands to be used as strands for tearing the protective sheath 2.

The intermediate material 5 prevents any contact between the protective sheath 2 and the optical fiber 3 and between the protective sheath 2 and the mechanical reinforcing strand(s).

For this purpose, the intermediate material 5 covers the assembly formed by the mechanical reinforcing strand(s) 4, generally made of aramid, and the optical fiber 3. This intermediate material 5 thus at least partly and preferably entirely fills the space in the cavity 21 that is not occupied by said assembly.

The intermediate material is a thermoplastic peelable material, also known as a "seal and peel" material. It comprises a temporary protection material that can be removed without leaving any traces. In this context a peelable material is to be regarded as a material that does not stick to the coating of the at least one optical fibre. Or, put in another way, the cohesive strength of the peelable material is higher than the adhesive strength between the peelable material and the coating of the optical fibre(s) onto which the peelable material is applied. As a consequence, the seal and peel material allows to remove the buffer material. Due to the encapsulation buffer it hardly sticks to yarns and fiber. If we do not use the seal and peel material, the molten buffer at extrusion sticks to the yarns and then the module can not be easily stripped for accessing the fiber. A target of the present invention is therefore to encapsulate a fiber and yarns in a material which is soft (even weak) enough, so that molten buffer material does not directly contact the yarns and the fiber. In that way, when a piece of buffer material is removed aftenivards, the soft encapsulating material breaks away and the piece of buffer ends up on slipping over the yarns and fiber.

It is of course possible that a part of a module, taken over its whole length, could have a place where the fiber contacts the buffer material, but the idea is really to have some peelable material in between the fiber and the buffer and also in between the yarns and the buffer. At what looks to be a contact point in the drawing, there shall be a thin film of a peelable material, sometimes as small as 5 microns or less.

The intermediate material is a peelable hot-melt material. A hot-melt material is a material that becomes fluid under the effect of heat.

The intermediate material 5 is made from a thermoplastic gel, such as a thermoplastic gel formulated on the basis of synthetic hydrocarbon polymers. A material of this family is sold, by way of example, by the supplier Henkel® under the reference Macroplast CF 405.

This type of material presents the consistency of a flexible gel over the entire ordinary utilization temperature range extending form -40°C to +70°C.

The intermediate material 5 presents a softening temperature higher than +70°C and a glass transition temperature lower than -40°C. For example, for Macroplast CF 405, the softening temperature is about +97°C and the glass transition temperature about -80°C.

The flexibility of the intermediate material 5 serves to limit mechanical stresses on the optical fiber 3, while guaranteeing good coupling between the coating 33 of the optical fiber 3 and the protective sheath 2, and also good coupling between the aramid strand(s) 4 and the protective sheath 2.

By way of example, the hardness of Macroplast CF 405 has been evaluated by a so-called cone-penetration test. For this purpose, the Applicant has used the measuring equipment specified in French standard NFT60-119. For an application time of 5 seconds (s), the measured penetrations were 70 tenths of a millimeter at 20°C, 35 tenths of a millimeter at -40°C, and 140 tenths of a millimeter at +70°C. From these measurements, the person skilled in the art deduces that the intermediate material 5 remains flexible over the entire utilization range of the buffered optical fiber 1.

The use of such an intermediate material 5 damps or even avoids lateral stresses on the optical fiber 3, which stress can give rise to microbends. Microbends give rise to attenuation of the optical signal conveyed by the optical fiber 3.

The intermediate material 5 also enables the protective sheath 2 to be separated properly without damaging the coating 33 of the optical fiber 3.

For this purpose, the Applicant has performed tests at ambient temperature with an intermediate material 5 made of Macroplast CF 405, a protective sheath 2 made of PA12, the optical fiber 3, and two aramid strands 4. That constituted the buffered optical fiber shown in Figure 1. The intermediate material 5 filled the entire space within the cavity 21 of matching diameter. Portions of the protective sheath having a length of 100 mm were stripped, revealing that the coating 33 of the optical fiber 3 was undamaged. It was possible to strip more than one meter of optical fiber 3 in this way in less than one minute. Given the characteristics of the intermediate material 5 in the usual utilization range of -40°C to +70°C, it can be seen that the protective sheath 2 will separate properly over this entire temperature range.

This is associated with the fact that the intermediate material 5 can be peeled off easily from the coating 33 of the optical fiber 3. In particular, it can be peeled off by hand without leaving traces on the coating 33 of the optical fiber 3.

The use of a thermoplastic intermediate material 5 presents the advantage of enabling said material to be extruded together with the protective sheath 2 in a single fabrication operation.

The intermediate material 5 is compatible with any material suitable for being used to make the protective sheath 2.

Advantageously, Macroplast CF 405 for the intermediate material 5 is associated with PA12 for the protective sheath 2, however that association is not limiting. These two materials are translucent and the color of the coating 33 of the optical fiber 3 can thus be seen through the protective sheath.

Figure 4 is a cross-section of a telecommunications cable 10 having a plurality of buffered optical fibers 1 of the invention that are left free within the cable.

The cable 10 comprises an outer sheath 11 defining a cavity 12 in which the buffered optical fibers 1 of the invention are housed. It usually also includes mechanical reinforcement 13 installed in the wall of the outer sheath 11 to limit axial deformation of the cable 10 both in contraction and in expansion when the cable is subjected to large temperature variations, with this being done by compensating the compression or expansion forces induced by the outer sheath 11. The outer sheath 11 may be made of polymer, generally a halogen-free flame-retardant (HFFR) material.

A buffered optical fiber 1 is extracted as follows. Two cuts are made in the outer sheath 11 along the cable 10 so as to create a first opening through which a buffered optical fiber 1 is cut, and a second opening through which the now-cut buffered optical fiber 1 is pulled out from the cable 10. To do this, it is necessary for the filling ratio of the cable not to be too great. It will also be understood that the length of the buffered optical fiber 1 extracted from the cable 10 corresponds to the distance between the two cuts made in the outer sheath 11 of the cable 10.

To fabricate the optical fiber, the method that is implemented comprises the steps that consist, in known manner, in stretching an optical fiber preform to form a fiber core 31 and cladding 32 surrounding the core, and then in applying a coating 33, generally made of photo-curable acrylate resin, that surrounds the cladding 32.

It will also be understood that, after the coating 33 has been cross-linked, the steps specific to the invention consists in placing at least one mechanical reinforcing strand 4 along the optical fiber 3 and then in extruding the peelable intermediate material 5 and the protective sheath 2 around the assembly formed by the optical fiber 3 and said at least one mechanical reinforcing strand 4 in a single fabrication operation.

Thus, unlike existing methods, the intermediate material has no need to be cross-linked, e.g. by passing under a UV lamp. Furthermore, the intermediate material 5 and the protective sheath 2 are put into place during the same fabrication step.

The operation of applying the intermediate material 5 with the protective sheath 2 is performed in a temperature range extending from 130°C to 160°C, and preferably equal to about 140°C.

No additional drying or curing step is needed.

## Claims

1. A buffered optical fiber structure (1) comprising:
• at least one optical fiber (3) constituted by a fiber core (31), cladding (32) surrounding the fiber core (31), and a coating (33) surrounding the cladding (32);
• a protective sheath (2) having a cavity (21) in which the at least one optical fiber (3) is placed;
the buffered optical fiber structure being **characterized in that** it comprises:
• at least one mechanical reinforcing strand (4) extending off-center in the cavity (21) along the at least one optical fiber (3); and
• a peelable intermediate material (5) in contact with the protective sheath (2) and encapsulating the assembly formed by the at least one optical fiber (3) and said at least one mechanical reinforcing strand (4),
* wherein the intermediate material (5) is applied on the coating (33) of the at least one optical fiber (3),
* wherein the intermediate material (5) is a hot-melt material, said intermediate material (5) presenting a softening temperature higher than +70°C; a glass transition temperature lower than -40° C; and the consistency of a flexible gel over a temperature range extending from -40°C to +70°C.

2. An optical fiber structure according to claim 1, wherein the cavity (21) includes two mechanical reinforcing strands (4) and one optical fiber (3).

3. An optical fiber structure according to claim 1, comprising two or more optical fibers (3).

4. An optical fiber structure according to any preceding claim, wherein the or each mechanical reinforcing strand (4) is made of aramid.

5. An optical fiber structure according to any preceding claim, wherein the at least one mechanical reinforcing strand (4) is such that the optical fiber deforms with maximum elongation of 0.5% when it is subjected to a required extraction force, e.g. of 25 N.

6. An optical fiber structure according to any preceding claim, wherein the protective sheath (2) is made from a material selected from: polybutylene terephthalate; nucleated polybutylene terephthalate; low-shrinkage polybutylene terephthalate; polyamide 12; amorphous polyamide 12; polyamide 11; polyvinyl chloride; nylon; polyethylene; a halogen-free flame retardant material; a urethane polymer; polyester; and a mixture thereof.

7. A telecommunications cable (10) comprising an outer sheath (11) defining a hollow space (12) having freely placed therein a plurality of buffered optical fiber structures (1) according to any preceding claim.

8. A method of fabricating an optical fiber structure according to any one of claims 1 to 6, including a step a) consisting in placing at least one mechanical reinforcing strand (4) along the at least one optical fiber (3) constituted by a fiber core (31), cladding (32) surrounding the fiber core (31), and a coating (33) surrounding the cladding (32), and in extruding a peelable intermediate material (5) and a protective sheath (2) around the assembly formed by the at least one optical fiber (3) and said at least one mechanical reinforcing strand (4) to encapsulate the assembly, wherein said intermediate material is a hot-melt material having a softening temperature higher than +70°C; a glass transition temperature lower than -40° C; and the consistency of a flexible gel over a temperature range extending from -40°C to +70°C; said intermediate material being applied on the coating (33) of the at least one optical fiber (3).

9. A method of fabricating an optical fiber structure according to claim 8, wherein provision is made, prior to step a), for a step consisting in drawing an optical fiber preform to form a fiber core (31) and cladding (32) surrounding the core, and in applying a coating (33) surrounding the cladding (32).

10. A method of fabricating an optical fiber structure according to any one of claims 8 to 9, wherein the step of extruding the intermediate material (5) is performed at a temperature lying in the range 130°C to 160°C, and preferably equal to about 140°C.

## Patentansprüche

1. Gepufferte Lichtwellenleiter-Struktur (1) mit:
• wenigstens einem Lichtwellenleiter (3), der aus einem Leiterkern (31), einem den Leiterkern (31) umgebenden Mantel (32) und einer den Mantel (32) umgebenden Beschichtung (33) aufgebaut ist;
• einer Schutzhülle (2) mit einer Kavität (21), in der der wenigstens eine Lichtwellenleiter (3) angeordnet ist;
wobei die gepufferte Lichtwellenleiter-Struktur **dadurch gekennzeichnet ist, dass** sie Folgendes umfasst:
• wenigstens eine mechanische Verstärkungslitze (4), die in der Kavität (21) exzentrisch entlang des wenigstens einen Lichtwellenleiters (3) verläuft; und
• ein abziehbares Zwischenmaterial (5), das im Kontakt mit der Schutzhülle (2) steht und die aus dem wenigstens einen Lichtwellenleiter (3) und der wenigstens einen mechanischen Verstärkungslitze (4) gebildete Baugruppe kapselt,
o wobei das Zwischenmaterial (5) auf die Beschichtung (33) des wenigstens einen Lichtwellenleiters (3) aufgebracht ist,
o wobei das Zwischenmaterial (5) ein Heißschmelzmaterial mit einer Erweichungstemperatur von über +70°C, einer Glasübergangstemperatur von weniger als -40°C und der Konsistenz eines flexiblen Gels im Temperaturbereich von -40°C bis +70°C ist.

2. Lichtwellenleiter-Struktur nach Anspruch 1, wobei die Kavität (21) zwei mechanische Verstärkungslitzen (4) und einen Lichtwellenleiter (3) umfasst.

3. Lichtwellenleiter-Struktur nach Anspruch 1, mit zwei oder mehr Lichtwellenleitern (3).

4. Lichtwellenleiter-Struktur nach einem vorhergehenden Anspruch, wobei die oder jede mechanische Verstärkungslitze (4) aus Aramid hergestellt ist.

5. Lichtwellenleiter-Struktur nach einem vorhergehenden Anspruch, wobei die wenigstens eine mechanische Verstärkungslitze (4) derart ausgebildet ist, dass sich der Lichtwellenleiter mit einer maximalen Längung von 0,5 % verformt, wenn er einer geforderten Ausziehkraft, zum Beispiel 25 N, unterworfen ist.

6. Lichtwellenleiter-Struktur nach einem vorhergehenden Anspruch, wobei die Schutzhülle (2) aus einem Material hergestellt ist, das aus den folgenden ausgewählt ist: Polybutylenterephthalat, nukleiertes Polybutylenterephthalat, schrumpfungsarmes Polybutylenterephthalat, Polyamid 12, amorphes Polyamid 12, Polyamid 11, Polyvinylchlorid, Nylon, Polyethylen, halogenfreies flammenhemmendes Material, Urethan-Polymer, Polyester und Mischungen davon.

7. Telekommunikationskabel (10) mit einer äußeren Hülle (11), die einen Hohlraum (12) definiert, in dem mehrere gepufferte Lichtwellenleiter-Strukturen (1) nach einem vorhergehenden Anspruch frei angeordnet sind.

8. Verfahren zur Herstellung einer Lichtwellenleiter-Struktur nach einem der Ansprüche 1 bis 6 mit einem Schritt a), der das Anordnen wenigstens einer mechanischen Verstärkungslitze (4) entlang des wenigstens einen Lichtwellenleiters (3), der aus einem Leiterkern (31), einem den Leiterkern (31) umgebenden Mantel (32) und einer den Mantel (32) umgebenden Beschichtung (33) aufgebaut ist, und das Extrudieren eines abziehbaren Zwischenmaterials (5) und einer Schutzhülle (2) um die Baugruppe umfasst, die aus dem wenigstens einen Lichtwellenleiter (3) und der wenigstens einen mechanischen Verstärkungslitze (4) gebildet ist, um die Baugruppe zu kapseln, wobei das Zwischenmaterial ein Heißschmelzmaterial mit einer Erweichungstemperatur von über +70 °C, einer Glasübergangstemperatur von weniger als -40 °C und der Konsistenz eines flexiblen Gels im Temperaturbereich von -40 °C bis +70 °C ist und das Zwischenmaterial auf die Beschichtung (33) des wenigstens einen Lichtwellenleiters (3) aufgebracht wird.

9. Verfahren zur Herstellung einer Lichtwellenleiter-Struktur nach Anspruch 8, wobei vorbereitend, vor Schritt a) ein Schritt ausgeführt wird, der das Ziehen einer Lichtwellenleiter-Preform zum Bilden eines Leiterkerns (31), das Aufziehen eines den Kern umgebenden Mantels (32) und das Aufbringen einer den Mantel (32) umgebenden Beschichtung (33) umfasst.

10. Verfahren zur Herstellung einer Lichtwellenleiter-Struktur nach einem der Ansprüche 8 bis 9, wobei der Schritt des Extrudierens des Zwischenmaterials (5) bei einer Temperatur im Bereich von 130°C bis 160°C, vorzugsweise bei einer Temperatur von ungefähr 140°C, durchgeführt wird.

## Revendications

1. Structure de fibre optique gainée (1) comprenant :
• au moins une fibre optique (3) constituée d'un coeur (31) de fibre, d'une gaine optique (32) entourant le coeur (31) de fibre, et d'un revêtement (33) entourant la gaine optique (32) ;
• une gaine de protection (2) ayant une cavité (21) dans laquelle est placée l'au moins une fibre optique (3) ;
la structure de fibre optique gainée étant **caractérisée en ce qu'**elle comprend :
• au moins un fil de renfort mécanique (4) s'étendant de manière décentrée dans la cavité (21) le long de l'au moins une fibre optique (3) ; et
• un matériau intermédiaire (5) pelable au contact de la gaine de protection (2) et englobant l'ensemble formé par l'au moins une fibre optique (3) et ledit au moins un fil de renfort mécanique (4),
* dans laquelle le matériau intermédiaire (5) est appliqué sur le revêtement (33) de l'au moins une fibre optique (3),
* dans laquelle le matériau intermédiaire (5) est un matériau thermofusible, ledit matériau intermédiaire (5) présentant une température de ramollissement supérieure à +70°C ; une température de transition vitreuse inférieure à -40°C ; et la consistance d'un gel souple sur une plage de température comprise entre -40°C et +70°C.

2. Structure de fibre optique selon la revendication 1, dans laquelle la cavité (21) comporte deux fils de renfort mécanique (4) et une fibre optique (3).

3. Structure de fibre optique selon la revendication 1, comprenant deux fibres optiques (3) ou plus.

4. Structure de fibre optique selon l'une des revendications précédentes, dans laquelle le ou chaque fil de renfort mécanique (4) est en aramide.

5. Structure de fibre optique selon l'une des revendications précédentes, dans laquelle l'au moins un fil de renfort mécanique (4) est tel que la fibre optique se déforme au maximum d'une élongation de 0,5% lorsqu'elle est soumise à une force d'extraction requise, par exemple de 25 N.

6. Structure de fibre optique selon l'une des revendications précédentes, dans laquelle la gaine de protection (2) est réalisée à partir d'un matériau choisi parmi du polybutylène terephtalate ; du polybutylène terephtalate nucléé ; du polybutylène terephtalate à faible retrait ; du polyamide 12 ; du polyamide 12 amorphe ; du polyamide 11 ; du chlorure de polyvinyle ; du nylon ; du polyéthylène ; un matériau retardateur de flamme sans halogène ; un polymère d'uréthane ; du polyester ; et un mélange de ceux-ci.

7. Câble de télécommunication (10) comprenant une gaine extérieure (11) définissant une cavité (12) ayant une pluralité de structures de fibres optiques gainées (1) selon l'une des revendications précédentes placées librement dans celle-ci.

8. Procédé de fabrication d'une structure de fibre optique selon l'une quelconque des revendications 1 à 6, comportant une étape a) consistant à placer au moins un fil de renfort mécanique (4) le long de l'au moins une fibre optique (3) constituée par un coeur (31) de fibre, une gaine optique (32) entourant le coeur (31) de fibre, et un revêtement (33) entourant la gaine optique (32), et à extruder un matériau intermédiaire (5) pelable et une gaine de protection (2) autour de l'ensemble formé par l'au moins une fibre optique (3) et ledit au moins un fil de renfort mécanique (4) pour englober l'ensemble, où ledit matériau intermédiaire est un matériau thermofusible ayant une température de ramollissement supérieure à +70°C ; une température de transition vitreuse inférieure à -40°C ; et la consistance d'un gel souple sur une plage de température comprise entre -40°C et +70°C ; ledit matériau intermédiaire étant appliqué sur le revêtement (33) de l'au moins une fibre optique (3).

9. Procédé de fabrication d'une structure de fibre optique selon la revendication 8, dans lequel il est prévu, préalablement à l'étape a), une étape consistant à étirer une préforme de fibre optique pour former un coeur (31) de fibre et une gaine optique (32) entourant le coeur, et à appliquer un revêtement (33) entourant la gaine optique (32).

10. Procédé de fabrication d'une structure de fibre optique selon l'une quelconque des revendications 8 et 9, dans lequel l'étape consistant à extruder le matériau intermédiaire (5) est réalisée à une température comprise dans la plage allant de 130°C à 160°C, et de préférence égale à environ 140°C.
